Europäisches Patentamt

European Patent Office

Office européen des brevets

(19)

(11) Numéro de publication: **0 277 869 B1**

(12)

# FASCICULE DE BREVET EUROPEEN

(45) Date de publication du fascicule du brevet:
28.03.90

(51) Int. Cl.⁴: **F16K 17/36, B60K 15/00**

(21) Numéro de dépôt: **88400152.0**

(22) Date de dépôt: **25.01.88**

(54) **Soupape en particulier pour le dégazage de réservoirs de carburant de véhicules automobiles.**

(30) Priorité: **26.01.87 FR 8700852**

(43) Date de publication de la demande:
**10.08.88 Bulletin 88/32**

(45) Mention de la délivrance du brevet:
**28.03.90 Bulletin 90/13**

(84) Etats contractants désignés:
**DE ES GB IT**

(56) Documents cités:
**DE-B- 1 004 877**
**FR-A- 891 696**
**US-A- 2 813 142**
**US-A- 2 894 524**
**US-A- 4 352 364**

(73) Titulaire: **JAEGER, 2, rue Baudin,**
**F-92303 Levallois-Perret(FR)**

(72) Inventeur: **Reymond, Philippe, 26, rue Georges Boulet,**
**F-91330 Yerres(FR)**

(74) Mandataire: **Martin, Jean-Jacques et ai, Cabinet**
**REGIMBEAU 26, Avenue Kléber, F-75116 Paris(FR)**

## Description

La présente invention concerne le domaine des soupapes. La présente invention trouve tout particulièrement application dans la conception d'une soupape pour le dégazage de réservoirs de carburant de véhicules automobiles.

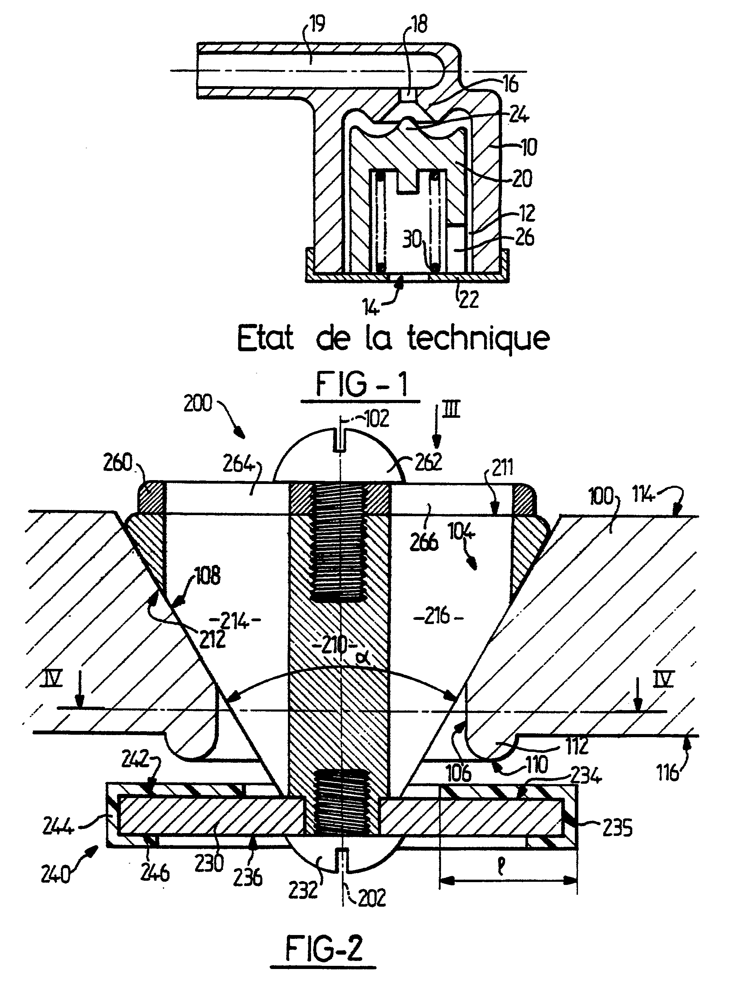

On a illustré schématiquement sur la figure 1 annexée la structure d'une soupape utilisée jusqu'ici pour le dégazage de réservoirs de carburant de véhicules automobiles.

Pour l'essentiel, la soupape illustrée sur la figure 1 comprend un corps 10 qui définit une chambre 12, un pointeau 20 logé dans la chambre 12 et un ressort 30.

La chambre 12 est cylindrique et borgne. Elle communique par son extrémité inférieure 14 avec le réservoir. De plus, la paroi supérieure 16 de la chambre 12 est munie d'une lumière traversante 18. La lumière 18 débouche dans un conduit d'évacuation 19.

En position normale d'utilisation le pointeau 20 repose contre une rondelle 22 solidaire de l'extrémité inférieure du corps 10. En conséquence, la pointe supérieure 24 du pointeau 20 est distante de la lumière 18. Dans cette position, des gaz peuvent s'échapper du réservoir par l'intermédiaire de la lumière 18. Les gaz, pour cela, pénètrent dans l'ouverture inférieure 14 de la chambre 12, traversent des fentes 26 ménagées dans la paroi du pointeau 20, et s'écoulent sur la périphérie du pointeau 20 avant d'atteindre la lumière 18. Le ressort 30 est engagé dans le pointeau 20 et repose contre la rondelle 22 précitée.

Le ressort 30 est taré de telle sorte qu'il contrebalance sensiblement le poids du pointeau 20 afin de ne pas repousser celui-ci contre la lumière 18 lorsque les axes de la chambre 12 et du pointeau 20 sont verticaux et que la lumière 18 est superposée à la pointe 24 du pointeau 20, comme illustré sur la figure 1.

Par contre, dès que le véhicule est incliné accidentellement d'au moins environ 90° par rapport à la position normale, le pointeau 20 repose contre la paroi latérale cylindrique de la chambre 12 et le ressort 30 pousse et positionne le pointeau 20 contre la lumière 18.

Comme cela est bien connu de l'homme de l'art, une telle soupape a essentiellement pour but, tout en autorisant l'échappement de gaz hors du réservoir, en position normale du véhicule, d'interdire la fuite de carburant en cas de retournement.

Les normes de sécurité généralement imposées dans ce contexte requièrent que la soupape de dégazage équipant les réservoirs de carburant de véhicules automobiles limite la fuite de carburant, en cas de retournement du véhicule, à un débit maximum de 10 cm³/mn.

La lumière de sortie 18 de la soupape est donc calibrée pour limiter la fuite du carburant en cas de retournement. Généralement la lumière calibrée 18 possède un diamètre maximum de l'ordre de 1,5 mm.

La soupape illustrée sur la figure 1 a déjà rendu de grands services. Néanmoins, elle présente différents inconvénients.

En particulier, la Demanderesse à constaté que dans certains cas d'utilisation cette soupape ne permet pas d'obtenir un dégazage satisfaisant ; c'est-à-dire la pression interne des réservoirs équipés d'une telle soupape peut s'élever très notablement au-dessus de la pression atmosphérique. Cet inconvénient résulte bien entendu du faible diamètre de la lumière 18 d'évacuation. Cet inconvénient est constaté notamment lorsque du carburant frais est ajouté dans le réservoir sur du carburant chaud (suite par exemple à un stockage du véhicule au soleil ou après un roulage prolongé du véhicule à bonne température). Cet inconvénient est également constaté lors de la montée rapide d'un col, lorsqu'il existe une différence importante de pression atmosphérique entre le col et la vallée inférieure.

Par ailleurs, bien que les normes de sécurité admettent une fuite de carburant de 10 cm³/mm en cas de retournement, une telle fuite constitue bien entendu un inconvénient évident.

Une autre soupape pour le dégazage de réservoir est décrite dans le document DE-B-1 004 877.

Cette soupape comprend un corps de soupape définissant un siège qui comporte, de part et d'autre d'une lumière, respectivement, un canal évasé en éloignement de la lumière, et une portée d'appui et un équipage mobile qui comporte une tête de guidage evasée apte à reposer par gravité contre le canal évasé et dont la base traverse la lumière du siège de soupape, au moins un passage traversant la tête de guidage évasée de l'équipage, et un clapet obturateur solidaire de la base de la tête évasée de l'équipage et qui possède une surface d'étanchéité en regard de la portée d'appui du siège, de telle sorte que la surface d'étanchéité soit distante de la portée d'appui, dans une première position de la soupape, lorsque l'axe du canal est sensiblement vertical et le canal évasé vers le haut, pour autoriser l'écoulement de fluide à travers la lumière et le passage ménagé dans la tête de guidage, tandis que lorsque l'axe de la soupape est pivoté sur la verticale par rapport à la première position, la tête de guidage peut glisser contre la paroi du canal en éloignement de la lumière, pour déplacer le clapet obturateur contre la portée d'appui afin d'interdire l'écoulement de fluide à travers la lumière.

Selon le document DE-B-1 004 877 la tête de guidage de l'équipage mobile et le clapet obturateur sont délimités par des envelopped sphériques. Il en résulte que l'inclinaison de l'équipage mobile par rapport à l'axe de la soupape varie selon l'inclinaison de la soupape. De ce fait, la zone de la surface d'étanchéité du clapet obturateur qui repose contre la portée d'appui varie en fonction de l'inclinaison de la soupape. Pour obtenir une bonne étachéité de la soupape décrite dans le document DE-B-1 004 877 il serait nécessaire de disposer d'une portée d'appui annulaire parfaite d'une part et d'une surface d'étanchéité sur le clapet obturateur parfaitement sphérique d'autre part. Dans la pratique de telles surfaces sont très difficiles à obtenir. Il est en particulier difficile de réaliser, de façon économique, une surface d'étanchéité parfaitement sphérique sur le clapet obturateur.

Les documents US-A-2 813 142 et US-A-2 894 524 décrivent des soupapes de sécurité pour batteries d'accumulateur. Ces soupapes sont fort complexes et non totalement fiables.

La présente invention a pour but principal de proposer une nouvelle soupape qui autorise un dégazage parfait du carburant contenu dans le réservoir immobile, quelles que soient les conditions d'utilisation de ce véhicule.

Un autre but de la présente invention est de proposer une soupape qui annule pratiquement toute fuite de carburant en cas de retournement du véhicule.

Ces différents buts sont atteints, dans le cadre de la présente invention, grâce à une soupape du type connu en soi de par le document DE-B-1 004 877 qui comprend un corps de soupape définissant un siège qui comporte de part et d'autre d'une lumière, respectivement, un canal évasé en éloignement de la lumière, et une portée d'appui, ainsi qu'un équipage qui comporte une tête de guidage évasée apte à reposer par gravité contre le canal évasé et dont la base traverse la lumière du siège de soupape, au moins un passage traversant la tête de guidage évasée de l'équipage, et un clapet obturateur solidaire de la base de la tête évasée de l'équipage et qui possède une surface d'étanchéité, en regard de la portée d'appui du siège, la surface d'étanchéité étant distante de la portée d'appui, dans une première position de la soupape, lorsque l'axe du canal est sensiblement vertical et le canal évasé vers le haut, pour autoriser l'écoulement de fluide à travers la lumière et le passage ménagé dans la tête de guidage, tandis que lorsque l'axe de la soupape est pivoté sur la verticale par rapport à la première position, la tête de guidage peut glisser contre la paroi du canal en éloignement de la lumière pour déplacer le clapet obturateur contre la portée d'appui afin d'interdire l'écoulement de fluide à travers la lumière caractérisée par le fait que le canal évasé et la tête de guidage de l'équipage mobile sont délimités par des enveloppes tronconiques de même conicité, et que le clapet obturateur est formé d'un disque plan perpendiculaire à l'axe de l'équipage et pourvu d'une garniture d'étanchéité.

Grâce à cette définition du canal évasé, de la tête de guidage et du clapet obturateur, l'axe de l'équipage mobile reste toujours parallèle à l'axe de la soupape et le clapet obturateur se plaque de façon sûre contre la portée d'appui en cas d'inclinaison prononcée de la soupape.

D'autres caractéristiques, buts et avantages de la présente invention apparaîtront à la lecture de la description détaillée qui va suivre et en regard des dessins annexés donnés à titre d'exemple non limitatif et sur lesquels, la figure 1 qui illustre l'état de la technique ayant déjà été décrite :

- la figure 2 représente une vue schématique en coupe longitudinale d'une soupape conforme à la présente invention,

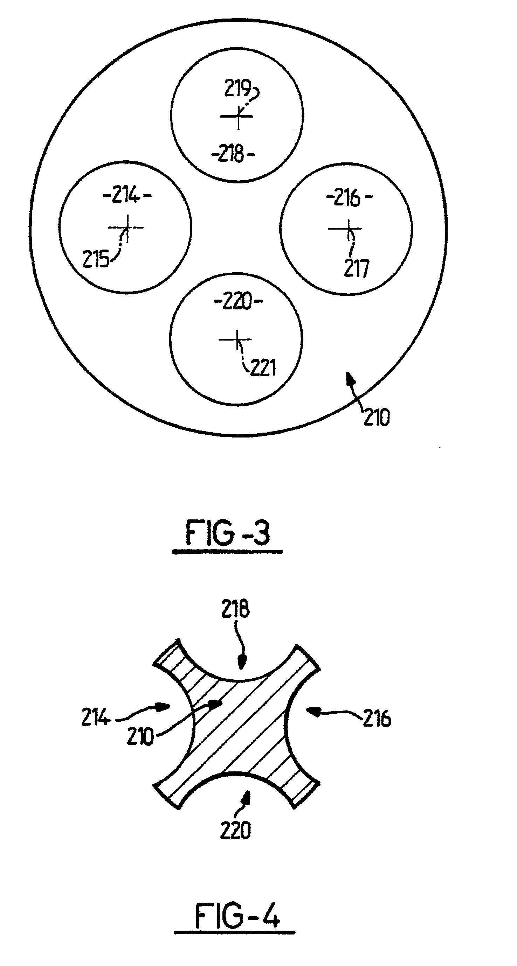

- la figure 3 représente une vue de dessus de l'équipage mobile de la soupape conforme à la présente invention selon une vue illustrée par la flèche référencée III sur la figure 2,

- la figure 4 représente une section de l'équipage mobile intégré à la soupape conforme à la présente invention selon un plan de coupe référence IV-IV sur la figure 2, et
- les figures 5, 6 et 7 illustrent schématiquement le fonctionnement de la soupape conforme à la présente invention en cas de retournement du véhicule; plus précisément la figure 5 illustre l'état de la soupape en position normale du véhicule, la figure 6 illustre l'état de la soupape lors d'une phase initiale de retournement et la figure 7 représente l'état de la soupape en cas de retournement du véhicule de 90°.

Comme illustré sur les figures annexées la soupape conforme à la présente invention comprend un corps de soupape 100 et un équipage mobile 200.

Le corps de soupape 100 définit un siège de soupape 104.

Ce siège 104 présente une symétrie par rapport à un axe 102.

Selon le mode de réalisation particulier illustré sur la figure 2 annexée, le corps de soupape 100 est formé d'une paroi plane, par example la paroi supérieure d'un réservoir. Les surfaces opposées de cette paroi plane sont référencées respectivement 114 et 116 sur la figure 2. Les surfaces 114 et 116, qui sont parallèles entre elles, sont horizontales en position normale de la soupape.

L'axe 102 de symétrie de la soupape est perpendiculaire aux surfaces 114 et 116.

Le siège 104 est défini par un orifice centré sur l'axe 102 et traversant le corps de soupape 100 pour relier les surfaces 114 et 116 précitées.

Plus précisement encore, le siège de soupape 104 comprend une lumière 106, et de part et d'autre de cette lumière, respectivement, un canal 108 évasé en éloignement de la lumière et une portée d'appui 100 transversale à l'axe 102 du canal.

La lumière 106 est cylindrique de révolution autour de l'axe 102.

Le canal 108 est tronconique de révolution autour de l'axe 102. Il diverge par rapport à l'axe 102 en éloignement de la lumière 106. Le canal évasé 108 débouche sur la surface supérieure 114 du corps de soupape 100.

La portée d'appui 110 est définie sur la surface inférieure 116 du corps de soupape 100.

Selon la mode de réalisation particulier illustré sur la figure 2, la portée d'appui 110 est définie par la génératrice inférieure d'un jonc d'enveloppe torique 112. Le jonc 112 est solidaire de la surface inférieure 116 du corps de soupape et centré sur l'axe de symétrie 102 du canal 108.

De préférence, l'angle d'ouverture α du canal évasé 108 est compris entre 45 et 120° en étant de préférence de l'ordre de 60°.

L'équipage mobile 200 comprend une tête de guidage 210, un clapet obturateur 230 et de préférence une masselotte 260.

L'équipage mobile possède un axe de symétrie référence 202 sur la figure 2.

En position normale d'utilisation comme illustré sur cette figure, les axes de symétrie 102 et 202 du canal 108 et de l'équipage mobile 200 sont confondus.

La tête de guidage 210 est évasée. Selon le mode de réalisation représenté sur la figure 2 la tête de guidage 210 est délimitée par une enveloppe extérieure tronconique de révolution autour de l'axe de symétrie 202.

La tête de guidage 210 possède une conicité identique au canal évasé 108. De ce fait, la tête de guidage 210 peut reposer par gravité contre le canal évasé 108.

La section, transversale à l'axe de symétrie 202, de la base de la tête de guidage 210 est inférieure à la section, transversale à l'axe de symétrie 102, de la lumière 106. Ainsi, comme illustré sur la figure 2 annexée, la base de la tête de guidage 210 traverse la lumière 106 du siège de soupape et émerge au-delà de la surface inférieure 116 du corps de soupape 100.

Selon le mode de réalisation illustré sur la figure 2 la base de la tête de guidage 210 est également tronconiques. Le cas échéant, la base de la tête de guidage 210 pourrait être cylindrique de révolution autour de l'axe 202, la section transversale de la base de cette tête de guidage restant inférieure à la section transversale de la lumière 106.

Le clapet obturateur 230 est solidaire de la base précitée de la tête évasée 210.

Selon le mode de réalisation représenté sur la figure 2, le clapet obturateur 230 est formé d'un disque plan s'étendant perpendiculairement à l'axe 202 de l'équipage mobile et centré sur cet axe de symétrie 202. Selon le mode de réalisation illustré sur la figure 2, le clapet obturateur 230 est fixé sur la base de la tête de guidage 210 à l'aide d'une vis 232. Bien entendu, d'autres modes de fixation du clapet obturateur 230 sur la base de la tête de guidage 210 peuvent être retenus.

Le clapet obturateur 230 est pourvu de préférence d'une garniture d'étanchéité 240 placée en regard de la portée d'appui 110 du siège.

Par ailleurs, la tête évasée 210 de l'équipage mobile est pourvu d'au moins un passage traversant.

Selon le mode de réalisation illustré sur les figures annexées, la tête de guidage 210 est plus précisément pourvue de 4 passages 214, 216, 218 et 220. Ces alésages 214 à 200 sont cylindriques. Ils sont équi-répartis autour de l'axe de symétrie 202 de l'équipage mobile, leurs axes 215, 217, 219 et 221 s'étendant parallèlement à l'axe de symétrie 202.

Les passages 214 à 220 débouchent d'une part, sur la surface supérieure 211 de la tête évasée 210 qui s'étend perpendiculairement à l'axe de symétrie 202, d'autre part sur la surface tronconique 212 de la tête évasée 210 à proximité de la base de celle-ci.

Comme cela apparaît à l'examen des figures annexées, la distance séparant les axes 215, 217, 219, 221 de l'axe de symétrie 202 est telle que les passages 214, 216, 218 et 220 débouchent au moins en partie en regard de la lumière 106, c'est-à-dire que l'ouverture inférieure des passages 214, 216, 218 et 220 n'est pas occultée entièrement par la surface tronconique 108 du canal évasé.

De plus, selon l'invention, la hauteur, considérée parallèlement à l'axe 102 du canal tronconique 108 et la hauteur, considérée parallèlement à l'axe 202, de la tête de guidage 210, sont déterminées de telle sorte que, dans une première position telle qu'illustrée sur la figure 2, la garniture d'étanchéité 240 soit distante de la portée d'appui 110.

Cette première position correspond à la position normale d'utilisation de la soupape, dans laquelle l'axe 102 du canal 108 est sensiblement vertical et le canal évasé vers le haut. Dans cette première position, du fluide, notamment du gaz, peut s'écouler entre la garniture d'étanchéité 240 et la portée d'appui 110, à travers la lumière 106 et les passages 214, 216, 218 et 220 ménagés dans la tête de guidage 210.

La section de l'espace annulaire définie entre la garniture d'étanchéité 240 et la portée d'appui 110, ainsi que la section libre de la lumière 106 définie par les passages 214, 216, 218 et 220 peuvent être largement supérieures à la section de la lumière calibrée 18 ménagée dans les soupapes utilisées jusqu'ici.

De ce fait, la soupape conforme à la présente invention autorise une mise à l'air libre certaine du réservoir et évite toute montée en pression de celui-ci.

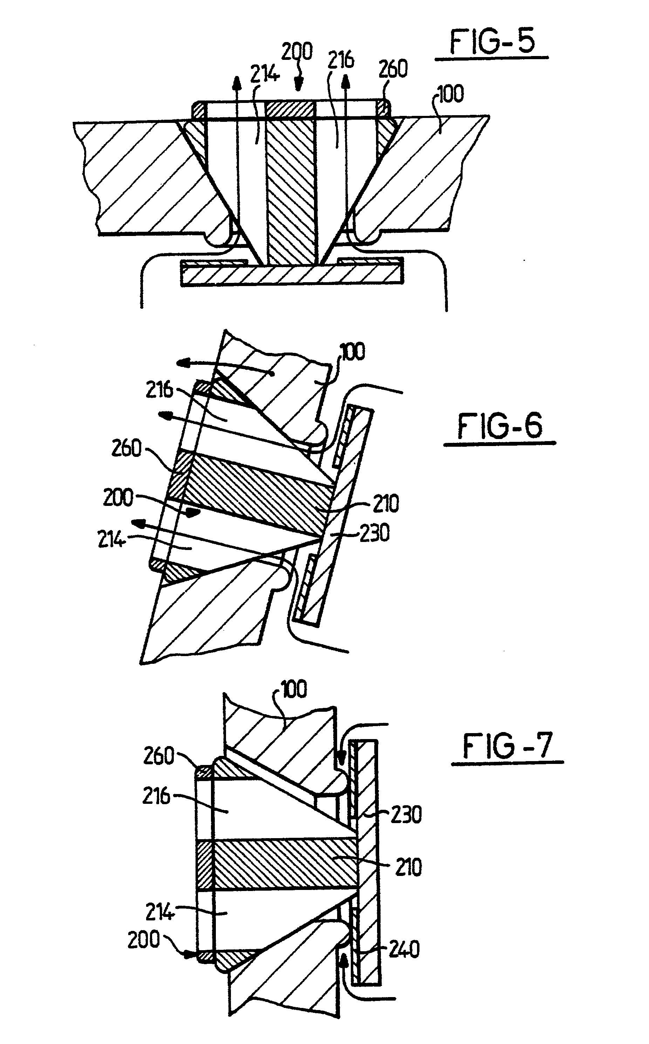

La première position, qui vient d'être décrite, de la soupape conforme à la présente invention, position qui autorise le dégazage, est illustrée schématiquement sur la figure 5.

Lorsque le véhicule équipé de la soupape se couche accidentellement, l'axe 102 de la soupape est progressivement incliné sur la verticale comme illustré sur la figure 6.

Lorsque la génératrice inférieure du canal tronconique 108, sur laquelle repose l'équipage mobile 200, franchit l'horizontale, c'est-à-dire converge vers le bas en éloignement de la lumière 106, l'équipage mobile glisse le long de la paroi du canal 108 en éloignement de la lumière 106. De ce fait, comme illustré sur la figure 7, le clapet obturateur 230 vient en appui contre la portée 110, obture la lumière 106 et interdit l'écoulement du fluide à travers cette lumière.

On notera que dans la mesure où l'équipage mobile 200 est délimité par une surface tronconique de même conicité que le canal évasé 108, au cours du glissement ainsi opéré, l'axe 202 de l'équipage mobile 200 reste constamment parallèle à l'axe de symétrie 102 du siège. De ce fait, le clapet obturateur 230 reste constamment perpendiculaire à l'axe 102 de symétrie de la soupape et une étanchéité parfaite est définie entre la portée d'appui 110 et la garniture d'étanchéité 242, toutes deux perpendiculaires aux axes de symétrie 102 et 202.

L'homme de l'art comprendra aisément que l'inclinaison du véhicule nécessaire pour amorcer le glissement de l'équipage mobile et donc pour assurer le passage de la première position de la soupape vers la second position correspond sensiblement à l'inclinaison définie au repos (première position) entre la paroi tronconique 108 du canal et l'horizontale.

Comme indiqué précédemment, de préférence, selon la présente invention, l'ouverture angulaire du canal évasé 108 est de l'ordre de 60°. En d'autres termes, l'inclinaison définie au repos entre la paroi tronconique 108 du canal et l'horizontale est de l'ordre de 60°.

Bien entendu, en cas de retournement complet, c'est-à-dire en cas d'inclinaison de 180° par rapport à la première position, le clapet obturateur 130 repose contre la portée d'appui 110 et là encore une étanchéité parfaite de la soupape est garantie.

De préférence, comme cela est illustré sur les figures annexées, la partie supérieure de la tête de guidage 210 de l'équipage mobile 200 est munie d'une masselotte 260.

Selon le mode de réalisation illustré sur les figures annexées, la masselotte 260 est formée d'une rondelle métallique s'étendant transversalement à l'axe 202. La rondelle métallique 260 est fixée sur la surface supérieure 211 de la tête de guidage 210 à l'aide d'une vis 262 ou à l'aide de moyens équivalents. La rondelle 260 formant masselotte est pourvue d'une pluralité d'orifices référencés 274, 276 alignés avec les passages 214, 216, 218 et 220 ménagés dans la tête de guidage 210.

La présence de cette masselotte 260 en partie supérieure de la tête de guidage 210 a pour but d'élever le centre de gravité de l'équipage mobile 200 pour faciliter le coulissement de l'équipage mobile vers la seconde position, c'est-à-dire la position d'obturation, en cas de retournement du véhicule.

De façon avantageuse, le centre de gravité de l'équipage mobile 200 est en effet placé, en position normale d'utilisation au-dessus de la pointe d'un cône dont les génératrices sont transversales à la surface d'enveloppe 212 de l'équipage 200.

Bien entendu la garniture d'étanchéité 240 est susceptible de faire l'objet de nombreux modes de réalisation.

De préférence, la garniture d'étanchéité 240 est formée à base de mousse de caoutchouc à alvéoles fermés résistant au carburant.

Cette garniture d'étanchéité 240 comprend au moins une rondelle 242 placée en regard de la porte d'appui 110.

La largeur de cette rondelle d'étanchéité 242, considérée radialement par rapport à l'axe de symétrie 202, est déterminée de telle sorte que la rondelle 242 puisse venir constamment en appui contre la portée d'appui 110, quelle que soit l'orientation de l'inclinaison du véhicule, c'est-à-dire quelle que soit l'orientation du débattement relatif entre les axes 102 du siège et 202 de l'équipage mobile.

En d'autres termes, la largeur radiale 1 de la rondelle d'étanchéité 242 doit être au moins égale au double du débattement défini entre les axes 102 et 202 lors du passage de la soupape entre la première position (de dégazage) et la seconde position (d'obturation).

La rondelle d'étanchéité 242 peut être fixée à l'aide de tous moyens classiques appropriés sur la surface 234 du clapet obturateur 230.

Cependant, selon le mode de réalisation préférentielle illustré sur la figure 2, la garniture d'étanchéité 240 comprend solidaire de la rondelle 242, une toile cylindrique 244 recouvrant la périphérie extérieure 235 du clapet obturateur 230 et un voile 246 en forme de couronne reposant contre la surface 236 du clapet obturateur dirigé à l'opposé de la porte d'appui 110.

Ainsi, la garniture d'étanchéité 240 peut être chassée sur le clapet obturateur 130 et maintenue sur celui-ci sans autre moyen de fixation spécifique.

Bien entendu la présente n'est pas limitée au mode de réalisation particulier qui vient d'être décrit mais s'étend à toutes variantes conformes à son esprit.

On a évoqué précédemment une soupape dont le siège 104 est défini dans la paroi supérieure d'un réservoir. Cependant, la soupape conforme à la présente invention pourra également être placée dans un boîtier indépendant logé dans un conduit.

## Revendications

1. Soupape, en particulier pour le dégazage de réservoirs de carburant de véhicules automobiles, du type comprenant:
   - un corps de soupape (100) définissant un siège (104) qui comporte, de part et d'autre d'une lumière (106), respectivement, un canal (108) évasé en éloignement de la lumière, et une portée d'appui (110) transversale à l'axe (102) du canal, et
   - un équipage mobile (200) qui comporte :
     . une tête de guidage (210) évasée apte à reposer par gravité contre le canal évasé (108) et dont la base traverse la lumière (106) du siège de soupape,
     . au moins un passage (214, 216, 218, 220) traversant la tête de guidage évasée (210) de l'équipage, et
     . un clapet obturateur (230) solidaire de la base de la tête évasée (210) de l'équipage et qui possède une surface d'étanchéité (242), en regard de la portée d'appui (110) du siège, de telle sorte que :
     la surface d'étanchéité (242) soit distante de la portée d'appui (100), dans une première position de la soupape, lorsque l'axe (102) du canal (108) est sensiblement vertical et le canal évasé vers le haut, pour autoriser l'écoulement de fluide à travers la lumière (106) et le passage (214-220) ménagé dans la tête de guidage, tandis que lorsque l'axe (102) de la soupape est pivoté sur la verticale par rapport à la première position, la tête de guidage (210) peut glisser contre la paroi du canal (108) en éloignement de la lumière (106), pour déplacer le clapet obturateur (230) contre la portée d'appui (110) afin d'interdire l'écoulement de fluide à travers la lumière (106),
     caractérisée par le fait que le canal évasé (108) et la tête de guidage (210) de l'équipage mobile sont délimités par des enveloppes tronconiques de même conicité, et que le clapet obturateur (230) est formé d'un disque plan perpendiculaire à l'axe (202) de l'équipage (200) et pourvu d'une garniture d'étanchéité (240).

2. Soupape selon la revendication 1, caractérisé par le fait que la garniture d'étanchéité (240) est formée à base de mousse de caoutchouc à alvéoles fermés résistante au carburant.

3. Soupape selon l'une des revendications 1 et 2, caractérisée par le fait qu'une masselotte (260) est solidaire de la partie supérieure de la tête évasée (210) de l'équipage mobile (200).

4. Soupape selon l'une des revendications 1 à 3, caractérisée par le fait que l'angle d'ouverture (α) du canal évasé (108) est compris entre 45 et 120° en étant de préférence de l'ordre de 60°.

5. Soupape selon l'une des revendications 1 à 4, caractérisée par le fait que la portée d'appui (110) est définie par un jonc (112) possédant une enveloppe torique centré sur l'axe de symétrie (102) du canal (108).

6. Soupape selon l'une des revendications 1 à 5, caractérisée par le fait que la tête de guidage évasée (210) de l'équipage mobile (200) comporte plusieurs passages traversants (214, 216, 218, 220), orientés parallèlement à l'axe (202) de l'équipage (200) et débouchant sur la périphérie de la base de la tête évasée (210).

## Patentansprüche

1. Ventil, insbesondere für die Entlüftung von Autobrennstofftanks, welches umfaßt:
— einen einen Ventilsitz (104) festlegenden Ventilkörper (100), welcher auf einer Seite einer Öffnung (106) einen mit der Entfernung von der Öffnung sich erweiternden Kanal (108) und auf der anderen Seite der Öffnung eine quer zur Achse (102) des Kanals liegende Auflagefläche (110) aufweist,
— ein bewegliches Organ (200), welches aufweist:
. einen erweiterten Führungskopf (210), der durch Schwerkraft auf dem sich erweiternden Kanal (108) zu ruhen vermag und dessen Basis quer zur Öffnung (106) des Ventilsitzes verläuft,
. mindestens einen Durchgang (214, 216, 218, 220) welcher den erweiterten Führungskopf (210) des beweglichen Organs durchsetzt, und
. eine fest mit der Basis des erweiterten Führungskopfes (210) des beweglichen Organs verbundene Verschlußklappe (230), welche eine Dichtfläche (242) gegenüber der Auflagefläche (110) des Ventilsitzes besitzt, derart, daß die Dichtfläche (242) in einer ersten Ventilstellung von der Auflagefläche (110) beabstandet ist, wenn die Achse (102) des Kanals (108) annähernd senkrecht steht und der sich erweiternde Kanal nach oben weist, um das Abfließen von Flüssigkeit durch die Öffnung (106) und den in dem Führungskopf vorgesehenen Durchgang (214–220) zu ermöglichen, wohingegen dann, wenn die Achse (102) des Ventils gegenüber der ersten Stellung um die Senkrechte verdreht ist, der Führungskopf (210) an der Kanalwand (108) von der Öffnung (106) weg zu gleiten vermag, um die Verschlußklappe (230) gegen die Auflagefläche (110) zu verstellen, um das Abfließen von Flüssigkeit durch die Öffnung (106) zu unterbinden, dadurch gekennzeichnet, daß der sich erweiternde Kanal (108) und der Führungskopf (210) des beweglichen Organs durch kegelstumpfförmige Hüllflächen von gleicher Konizität begrenzt sind und daß die Verschlußklappe (230) von einer ebenen Scheibe gebildet wird, die senkrecht zur Achse (202) des Organs (200) steht und mit einem Dichtungsüberzug (240) versehen ist.

2. Ventil nach Anspruch 1, dadurch gekennzeichnet, daß der Dichtungsüberzug (240) auf der Basis von geschlossenzelligem Schaumgummi, welcher gegenüber dem Brennstoff widerstandsfähig ist, gebildet ist.

3. Ventil nach einem der Ansprüche 1 und 2, dadurch gekennzeichnet, daß ein Anguß (260) fest mit dem oberen Teil des erweiterten Kopfes (210) des beweglichen Organs (200) verbunden ist.

4. Ventil nach einem der Ansprüche 1 bis 3, dadurch gekennzeichnet, daß der Öffnungswinkel (α) des sich erweiternden Kanals (108) zwischen 45 und 120° liegt und vorzugsweise in der Größenordnung von 60° liegt.

5. Ventil nach einem der Ansprüche 1 bis 4, dadurch gekennzeichnet, daß die Auflagefläche (110) durch einen Ringsteg (112) festgelegt ist, welcher eine wulstförmige Hüllfläche aufweist, die bezüglich der Symmetrieachse (102) des Kanals (108) zentriert ist.

6. Ventil nach einem der Ansprüche 1 bis 5, dadurch gekennzeichnet, daß der erweiterte Führungskopf (210) des beweglichen Organs (200) mehrere ihn durchquerende Durchgänge (214, 216, 218, 220) aufweist, welche parallel zur Achse (202) des Organs (200) ausgerichtet sind und an der Außenseite der Basis des erweiterten Kopfes (210) münden.

## Claims

1. Valve, in particular for the removal of gas from motor vehicle fuel tanks, of the type comprising:
— a valve body (100) defining a seat (104) which comprises, on either side of an aperture (106), respectively, a flared channel (108) extending away from the aperture, and a support boss (110) which is transverse with respect to the axis (102) of the channel, and
— a movable arrangement (200) which comprises:
. a flared guide head (210) able to rest by gravity against the flared channel (108) and whereof the base passes through the aperture (106) in the valve seat,
. at least one passage (214, 216, 218, 220) passing through the flared guide head (210) of the arrangement, and
. a closure valve (230) integral with the base of the flared head (210) of the arrangement and which comprises a sealing surface (242), facing the support boss (110) of the seat, so that: the sealing surface (242) is separated from the support boss (110), in a first position of the valve, when the axis (102) of the channel (108) is substantially vertical and the channel is flared upwardly, in order to allow the flow of fluid through the aperture (106) and the passage (214–220) provided in the guide head, whereas when the axis (102) of the valve is pivoted in regard of the vertical with respect to the first position, the guide head (210) may slide

against the wall of the channel (108) away from the aperture (106), in order to move the closure valve (230) against the support boss (110) so as to prevent the flow of fluid through the aperture (106), characterised by the fact that the flared channel (108) and the guide head (210) of the movable arrangement are defined by frustoconical envelopes of the same conicity and that the closure valve (230) is formed by a flat disc perpendicular to the axis (202) of the arrangement (200) and provided with a sealing gasket (240).

2. Valve according to Claim 1, characterised by the fact that the sealing gasket (240) is formed on the basis of foam rubber with closed cells, which is resistant to fuel.

3. Valve according to one of Claims 1 and 2, characterised by the fact that a counterweight (260) is integral with the upper part of the flared head (210) of the movable arrangement (200).

4. Valve according to one of Claims 1 to 3, characterised by the fact that the opening angle ($\alpha$) of the flared channel (108) is comprised between 45 and 120°, preferably being of the order of 60°.

5. Valve according to one of Claims 1 to 4, characterised by the fact that the support boss (110) is defined by a ring (112) having an annular envelope centered on the axis of symmetry (102) of the channel (108).

6. Valve according to one of Claims 1 to 5, characterised by the fact that the flared guide head (210) of the movable arrangement (200) comprises several through-passages (214, 216, 218, 220), oriented parallel to the axis (202) of the arrangement (200) and opening out on the periphery of the base of the flared head (210).

Etat de la technique

FIG - 1

FIG-2

FIG -3

FIG-4

FIG-5

FIG-6

FIG-7